# EUROPEAN PATENT APPLICATION

(11) **EP 2 848 452 A2**
(43) Date of publication of application: **18.03.2015**
(21) Application number: 14177472.9
(22) Date of filing: 17.07.2014
(51) Int. Cl.: B60L 9/22, B60L 9/24, B60L 9/28

(54) **Traction converter system**

(30) Priority: 13.09.2013 JP 2013189989
(71) Applicant: Hitachi Ltd., Tokyo (JP)
(72) Inventor: Ayata, Masataka, Chiyoda-ku, Tokyo 100-8280 (JP); Nozaki, Yuichiro, Chiyoda-ku, Tokyo 100-8280 (JP)
(74) Representative: Gill, Stephen Charles

(57) **Abstract**

To propose a brake chopper system that suppresses additional devices when a brake chopper is mounted.

A traction converter system includes a transformer that transforms AC power input from a collector collecting AC power, a first power converter that converts the AC power transformed in the transformer into DC power, a second power converter that converts the DC power into three-phase AC power, a filter capacitor provided between the first and the second power converters, and a charging resistor provided between the first power converter and the transformer and limiting charge current flowing from the transformer into the filter capacitor. The first power converter supplies regenerative power generated in a three-phase AC motor at braking of a rolling stock to the charging resistor and consumes the regenerative power with the charging resistor.

## Description

### BACKGROUND OF THE INVENTION

### 1. Field of the Invention

The present invention relates to a traction converter system and a method of driving a traction converter system for AC rolling stock or AC-DC rolling stock.

### 2. Description of the Related Art

An electric rolling stock traveling in an AC electrified section has a traction converter control system including a first power converter that converts AC power input from a power wire via a transformer into DC power, and a second power converter that converts DC power into three-phase AC power. When the rolling stock travels in the DC section, power from the power wire is input to a DC output unit between the first power converter and the second power converter.

In the electric rolling stock, at acceleration, three-phase AC power is supplied from the power wire to a motor via the first power converter and the second power converter in the AC section, three-phase AC power is supplied from the power wire to the motor via the second power converter in the DC section, and thereby, the motor is driven. In the electric rolling stock, at deceleration, the three-phase AC power generated in the motor is returned to the power wire via the second power converter, the first power converter, and the transformer in the AC section, the power is returned to the power wire via the second power converter in the DC section, and thereby, a regenerative brake that reuses the generated power is used.

However, in the case where it is impossible to return power to the power wire when a pantograph is separated from the power wire or when the rolling stock passes through a dead section, where the rolling stock travels on a line for which returning of power to the power wire is not allowed, or where the voltage of the power wire rises to a predetermined value or more, so that it is impossible return power to the power wire, the rolling stock is decelerated using an air brake. In the air brake, the brake shoe of the air brake is worn according to the frequency of use, and there is a problem that, when the frequency of use of the air brake is higher, the brake shoe is getting worn and the replacement cycle of the brake shoe is shorter. Accordingly, a brake chopper system that obtains a braking force by consuming power generated in the motor with a resistor called a brake resistor when it is impossible to use the regenerative brake has been designed and put into practical use. By the brake chopper system, the frequency of use of the air brake may be reduced.

On the other hand, for the brake chopper system, it is necessary to provide a chopper device, a resistor, and a reactor separately from the first power converter and the second power converter, and there is a problem in mounting that the traction converter system becomes larger.

In contrast, a method of reducing the devices forming the brake chopper system by using the first power converter as the chopper device is disclosed in Patent Document 1 (JP-A-2004-312939).

However, in Patent Document 1, an existing device is applied to the chopper device and the reactor and the brake resistor are separately necessary, and the downsizing effect on the device is smaller.

### SUMMARY OF THE INVENTION

The invention has been achieved in view of the problems in related art, and an object of the invention is to propose a brake chopper system with reduced additional devices.

In order to solve the problems, a traction converter system includes a transformer that transforms AC power input from a collector collecting AC power, a first power converter that converts the AC power transformed in the transformer into DC power, a second power converter that converts the DC power into three-phase AC power, a filter capacitor provided between the first and the second power converters, and a charging resistor provided between the first power converter and the transformer and limiting charge current flowing from the transformer into the filter capacitor, wherein the first power converter supplies regenerative power generated in a three-phase AC motor at braking of a rolling stock to the charging resistor and consumes the regenerative power with the charging resistor.

According to the invention, a reactor and a brake resistor necessary for the brake chopper device in related art is used in common with other devices, and thereby, the number of devices may be reduced and the number of parts of the traction converter system may be reduced. Thus, there are advantages that reduction in size and weight of the system may be realized and a risk of failure may be reduced and reliability may be improved by the reduction of the number of parts.

### BRIEF DESCRIPTION OF THE DRAWINGS

Fig. 1 shows a system configuration in example 1.
Fig. 2 shows another system configuration in example 1.
Fig. 3 shows a current path 1 in example 1, example 2, example 3.
Fig. 4 shows a current path 2 in example 1, example 2, example 3.
Fig. 5 shows a control logic in example 1, example 2, example 3.
Fig. 6 shows a system configuration in example 2.
Fig. 7 shows a system configuration in example 3.
Fig. 8 shows another system configuration in example 3.
Fig. 9 shows another system configuration in example 3.

### DETAILED DESCRIPTION OF THE EMBODIMENTS

As below, a plurality of specific examples will be explained using the drawings.

### [Example 1]

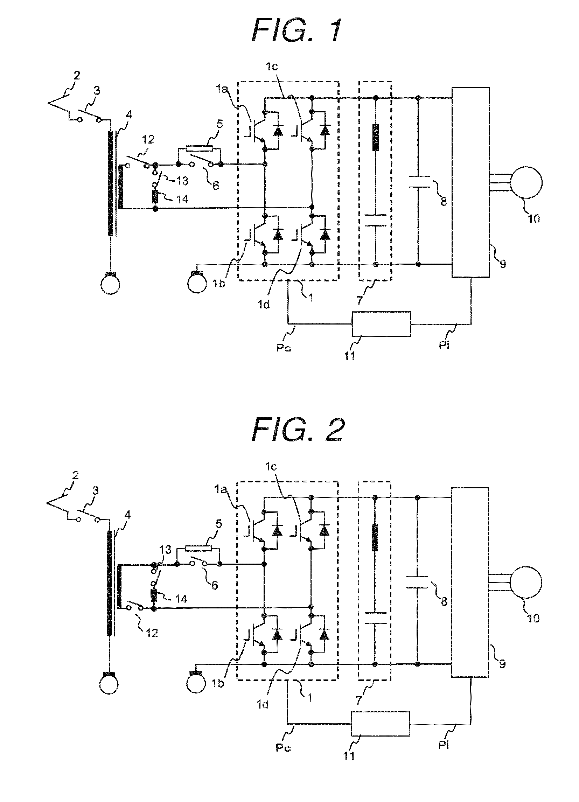

Fig. 1 shows a first example in a traction converter system of the invention.

First, configurations of devices will be explained. A first power converter 1 converts AC power supplied from a pantograph for AC power wire 2 via a switch 3 and a transformer 4 into DC power and supplies the power to a second power converter 9. Here, the first power converter 1 includes switching elements 1a to 1d. Specifically, each of the switching elements 1a to 1d includes a transistor such as an IGBT and a diode connected in reverse parallel to the transistor. 1a and 1b, 1c and 1d are respectively series-connected, and a series circuit of 1a and 1b and a series circuit of 1c and 1d are parallel-connected. Further, an intermediate point between the switching elements 1a and 1b is connected to one side of a secondary-side winding of the transformer and an intermediate point between the switching elements 1c and 1d is connected to the other side of the secondary-side winding of the transformer.

The switch 3 may be a vacuum circuit breaker that can break a current or an electromagnetic contactor that opens and closes an electric circuit by an action of an electromagnet, or has a configuration in which the vacuum circuit breaker and the electromagnetic contactor are series-connected. A circuit in which a charging resistor 5 and an electromagnetic contactor 6 are parallel-connected and an electromagnetic contactor 12 are series-connected between the first power converter 1 and the transformer 4. A brake reactor 14 is connected in parallel to the transformer 4 between the charging resistor 5 and the electromagnetic contactor 6 and the electromagnetic contactor 12, and is opened by an electromagnetic contactor 13 when the brake reactor 14 is not used.

Here, in Fig. 1, the electromagnetic contactor 12 is connected between the transformer 4 and the charging resistor 5 and the electromagnetic contactor 6, however, it is only necessary that the electromagnetic contactor 12 is connected between the transformer 4 and the brake reactor 14. That is, the electromagnetic contactor 12 may be provided between the transformer 4 and the switching elements 1c and 1d or provided on both ends of the transformer. Further, the electromagnetic contactor 13 that opens the brake reactor 14 may be provided on either side of the brake reactor 14, or on both ends, not on one end of the brake reactor 14.

A part between the first power converter 1 and the second power converter 9 is referred to as "DC stage", and a filter circuit 7 that absorbs rectification ripple twice the power wire voltage frequency and a filter capacitor 8 are provided on the DC stage. The filter circuit 7 is not necessarily provided. The second power converter 9 converts DC supplied from the first power converter 1 into three-phase AC power to drive a three-phase motor 10. A controller 11 outputs signals Pc and pi for controlling the first power converter 1 and the second power converter 9.

Next, a specific operation of the traction converter system will be explained.

First, an operation for preventing flow of overcurrent from the power wire into the filter capacitor 8 using the charging resistor 5 is explained. When confirming that the switch 3 has been closed, the controller 11 closes only the switch 12. Concurrently, a current flows to the filter capacitor 8 via the charging resistor 5, and, even when the filter capacitor 8 is not charged, flow of overcurrent is prevented. Then, when the voltage of the filter capacitor 8 exceeds a predetermined value, the switch 6 is closed. The voltage when the switch 6 is closed may be a fixed value or changed according to a secondary voltage of the transformer.

Then, an operation when regenerative power is consumed in the charging resistor 5 is explained. When sensing one of separation of the pantograph, passage in the dead section, traveling on a line for which returning of power to the power wire is not allowed, and rise of the power wire voltage to a predetermined value or more during regeneration of the rolling stock, the controller 11 determines that the regenerative power should not be returned to the power wire and switches the first power converter 1 to a mode of operating the power converter 1 as a brake chopper (hereinafter, referred to as "brake chopper mode"). In the brake chopper mode, first, the first power converter 1 and the second power converter 9 are stopped, and the electromagnetic contactor 12 and the electromagnetic contactor 6 are opened. It is not necessarily to open the switch 3, however, it is desirable to open the switch when the pantograph 2 is in contact with the power wire. In this regard, when the switch 3 has a configuration in which the vacuum circuit breaker and the electromagnetic contactor are series connected, only the electromagnetic contactor is opened for suppression of the number of operations of the vacuum circuit breaker. After opening of these devices is confirmed, the electromagnetic contactor 13 is closed and the brake reactor 14 is connected to the main circuit.

When the electromagnetic contactor 13 is closed, the controller 11 allows the second power converter 9 to perform regenerative operation again, and allows the first power converter 1 to operate as a brake chopper that controls the current flowing in the charging resistor 5 so that the voltage of the filter capacitor 8 may be constant.

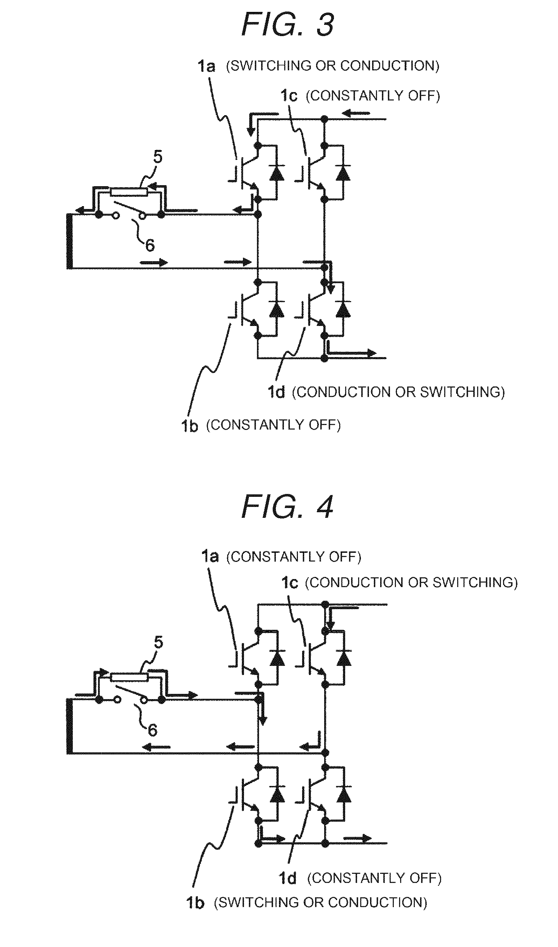

When the first power converter 1 is operated as the brake chopper, as a path in which a current flows, a path 1 through the switching elements 1a and 1d as shown in Fig. 3 and a path 2 through the switching elements 1b and 1c as shown in Fig. 4 are considered, and the current may flow in either path.

Here, according to the technology of Patent Document 1, only a part of the first power converter is applied to the chopper device, and there is a problem that only a part of the switching elements of the first power converter is frequently used and deteriorated and reliability as the whole first power converter is lower. Accordingly, for example, in order to homogenize the degree of deterioration of the switching elements 1a to 1d forming the first power converter 1, the path 1 and the path 2 may be alternately exchanged at each time when the first power converter 1 is operated as the chopper. In addition, the path may be changed if the number of times when the first power converter 1 is operated as the chopper device reaches a predetermined number, the path may be changed if the time when the first power converter is operated as the chopper device reaches a predetermined time, or the time integrated value of the current flowing in one path may be calculated and the path may be changed if the time integrated value (i.e., total amount of current) reaches a predetermined value. When the current path is changed, the power converter may be temporarily stopped so that the switching element at the high-voltage side and the switching element at the low-voltage side of the same phase may not simultaneously turned on, and then, the current path may be changed.

As described above, when the first power converter 1 is operated in the same manner as the brake chopper in related art, it is necessary to mount a control system that operates on the break chopper in addition to a control system as the typical power converter on the controller 11 of the first power converter 1. These controls may be changed at the start of the brake chopper mode.

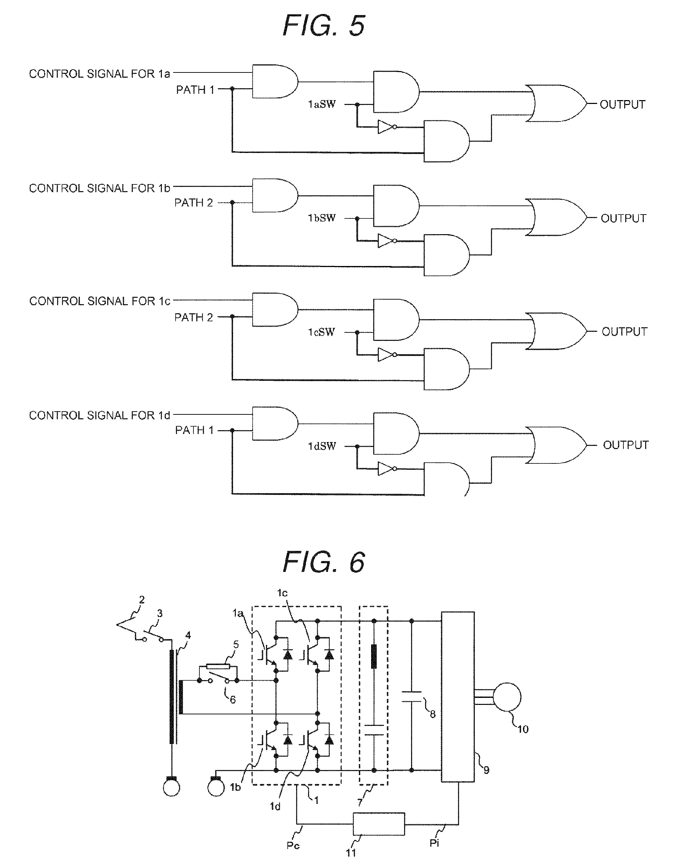

Further, in Figs. 3 and 4, it is necessary to constantly turn off the switching element not in the path in which the current flows for prevention of short circuit between the high-voltage side and the low-voltage side. However, depending on the device, only the control signal of the switching element at the high-voltage side (e.g., 1a) may be calculated and the control signal of the switching element at the low-voltage side (e.g., 1b) may be created by inversion of the control signal at the high-voltage side within the controller 11. In this case, it is impossible to generate a control signal in the brake chopper mode of operating only the switching element at the high-voltage side or the low-voltage side. Accordingly, processing of determining the element to be switched for each path in which the current flows and constantly turning on or constantly turning off the other elements according to the flow path is added. Fig. 5 shows an example of a logic for realization of control signal generation of the brake chopper in the configurations in Figs. 3 and 4.

In the logic of Fig. 5, the control signals of the switching elements 1a to 1d are digital signals with on-command of "1" and off-commend of "0", and additionally, flags indicating the current paths and enabling signals 1aSW to 1dSW with "1" indicating "enable" and "0" indicating "disable" are used. For example, the case where, in the path 1, the switching element 1a at the high-voltage side is switched, the switching element 1d is in the conduction state, and the switching element 1b and the switching element 1c are constantly off is considered. First, the current flows in the path 1 and the flag of the path 2 is not on and the output of the control signals of the switching elements 1b and 1c are constantly "0", i.e., off-command. Then, the enabling signal 1dSW for switching of 1d is "0", and the output is constantly "1", i.e., on-command, and, regarding the switching element 1a, the control signal is output without change. That is, switching of the switching element 1a is controlled based on the control signal for controlling the conduction ratio of the switching element 1a so that the voltage of the filter capacitor 8 may be constant. Here, when the whole break force of the rolling stock is consumed in the charging resistor, it is necessary to control the conduction ratio of the switching element so that the voltage of the filter capacitor 8 may be constant, however, when the break force of the rolling stock is shared by the charging resistor and the air break, the conduction ratio of the switching element is determined according to the amount of breaking borne by the charging resistor.

Note that the element to be switched may be either element at the high-voltage side or the low-voltage side, and the element to be switched may be alternately changed between the high-voltage side and the low-voltage side at each time when the first power converter 1 is operated as the chopper like the current path. In addition, the path may be changed if the number of times when the first power converter 1 is operated as the chopper device reaches a predetermined number, the path may be changed if the time when the first power converter is operated as the chopper device reaches a predetermined time, the time integrated value of the current flowing in one path may be calculated and the element to be switched may be changed between the high-voltage side and the low-voltage side if the time integrated value reaches a predetermined value.

If it becomes possible to return the power to the power wire while the first power converter 1 is operated as the chopper device, first, the operation of the first power converter 1 and the second power converter 9 is once stopped and the electromagnetic contactor 13 is opened. Then, after closing and opening of the respective devices that close the switch 3, the electromagnetic contactor 6, and the electromagnetic contactor 12 are confirmed, the normal regenerative operation of returning power from the second power converter 9 to the power wire via the first power converter 1 and the transformer 4 is performed.

As described above, the brake chopper is formed using the first power converter 1, the charging resistor 5, and the brake reactor 14, and thereby, the charging resistor 5 may be used as a resistor that suppresses an excessive charge current to the filter capacitor 8 and a resistor that consumes the regenerative power. Therefore, a smaller brake chopper system than the brake chopper system in related art may be realized. In Fig. 1 of the example 1, driving of one three-phase motor is shown, however, a configuration in which a plurality of three-phase motors are driven may be employed. Further, connection of one first power converter to the transformer 4 is shown, however, a configuration in which a plurality of first power converters are connected may be employed and, in this case, it is only necessary that the parallel circuit of the charging resistor and the electromagnetic contactor and the brake reactor are connected with respect to each first power converter.

### [Example 2]

Fig. 6 shows a second example in the traction converter system of the invention. The example is different from the example 1 in that no brake reactor 14 is connected.

First, configurations of devices will be explained. The configurations are nearly the same as those in Fig. 1, and only the differences will be explained. In the example 2, the brake chopper system is formed using a secondary-side winding of the transformer 4 as a break reactor in place of the brake reactor 14 and the brake reactor 14 and the electromagnetic contactors 12 and 13 are removed from the circuit in Fig. 1, however, the electromagnetic contactor 12 may be provided.

Next, a specific operation of the traction converter system will be explained. When sensing one of separation of the pantograph, passage in the dead section, traveling on a line for which returning of power to the power wire is not allowed, and rise of the power wire voltage to a predetermined value or more during regeneration of the rolling stock, the controller 11 determines that the regenerative power should not be returned to the power wire and switches to the brake chopper mode. Then, first, the first power converter 1 and the second power converter 9 are stopped, and the switch 3 and the electromagnetic contactor 6 are opened. In this regard, when the switch 3 has a configuration in which the vacuum circuit breaker and the electromagnetic contactor are series-connected, only the electromagnetic contactor is opened for suppression of the number of operations of the vacuum circuit breaker. After opening of these devices is confirmed, the second power converter 9 is allowed to perform regenerative operation again, and the first power converter 1 is allowed to be operated as a brake chopper that controls the current flowing in the charging resistor 5 so that the voltage of the filter capacitor 8 may be constant. The operation as the brake chopper is the same as the operation in the example 1.

If it becomes possible to return the power to the power wire while the first power converter 1 is operated as the chopper device, first, the operation of the first power converter 1 and the second power converter 9 is once stopped and the switch 3 and the electromagnetic contactor 6 are closed. Then, the normal regenerative operation of returning power from the second power converter 9 to the power wire via the first power converter 1 and the transformer 4 is performed. Note that, in the case where the secondary-side winding of the transformer 4 is used as the brake reactor, magnetization may occur in the transformer after use, and accordingly, the first power converter 1 may be controlled to eliminate the magnetic flux accumulated in the transformer 4 before the switch 3 and the electromagnetic contactor 6 are closed. For example, supposing that a current flowing in the path 1 is positive and a current flowing in the path 2 is negative, the current flowing in the transformer 4 may be time integrated, and the current may flow in the transformer 4 so that the integration result may be zero before the switch 3 and the electromagnetic contactor 6 are closed. That is, the integrated values of the currents flowing in the transformer 4 in the opposite directions may be made nearly equal.

As described above, the brake chopper is formed using the first power converter 1, the transformer 4, and the charging resistor 5, and thereby, the brake reactor 14 and the electromagnetic contactor 13 may be omitted from the example 1 and the brake chopper system may be further downsized. In Fig. 6 of the example 2, driving of one three-phase motor is shown, however, a configuration in which a plurality of three-phase motors are driven may be employed. Further, connection of one first power converter to the transformer is shown, however, a configuration in which a plurality of first power converters are connected may be employed and, in this case, it is only necessary that the charging resistor and the electromagnetic contactor are parallel-connected with respect to each first power converter.

### [Example 3]

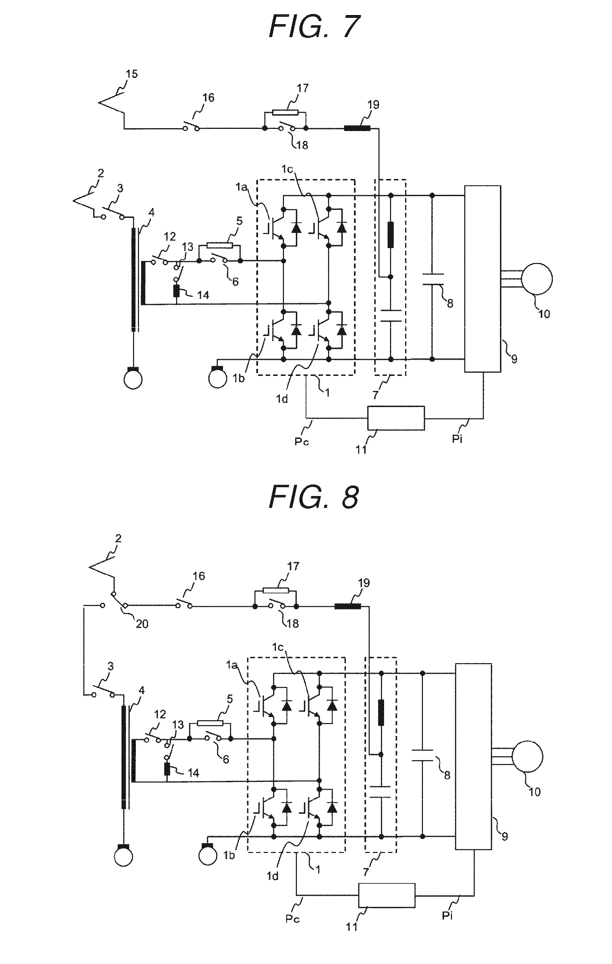

Fig. 7 shows a third example in the traction converter system of the invention. The example is different from the example 1 in that an AC-DC rolling stock can travel even in a DC power line section.

First, configurations of devices will be explained. The devices in common with Fig. 1 may have the same signs and their explanation will be omitted. A pantograph for DC power wire 15 is in contact with the power wire when traveling in the DC power wire section, and DC power is supplied from the pantograph 15 to a DC stage part via a high-speed circuit breaker 16 and a filter reactor 19.

An interrupter 18 and a charging resistor for DC 17 are connected between the high-speed circuit breaker 16 and the filter reactor 19. Here, in Fig. 7, the output side of the filter reactor 19 is connected to an intermediate part of the filter circuit 7, and this is for the reactor forming the filter circuit 7 to have the same function as the filter reactor 19. The output side of the filter reactor may be directly connected to the high-voltage side of the DC stage. In the case of traveling in the DC power wire section, the switch 3 and the electromagnetic contactors 6 and 12 are opened and the electromagnetic contactor 13 is closed. In the case of traveling in the AC power wire section, the high-speed circuit breaker 16 and the interrupter 18 are opened.

Further, the pantograph for DC power wire 15 may be used in common with the pantograph for AC power wire 2. In this case, a switch 20 is provided between the pantograph 2, and the switch 3 and the high-speed circuit breaker 16 as shown in Fig. 8, and the current path is changed between the AC section and the DC section. In the configuration as shown in Fig. 8, in the case of traveling in the DC power wire section, the switch 20 is connected to the high-speed circuit breaker 16 side, the switch 3 and the electromagnetic contactors 6 and 12 are opened, and the electromagnetic contactor 13 is closed. In the case of traveling in the AC power wire section, the switch 20 is connected to the switch 3 side, and the high-speed circuit breaker 16 and the interrupter 18 are opened.

Next, a specific operation of the traction converter system shown in Figs. 7 and 8 will be explained.

First, the case of traveling in the AC power wire section is explained. In the case of traveling in the AC power wire section, the high-speed circuit breaker 16 and the interrupter 18 are opened (further, in the case of Fig. 8, the switch 20 is connected to the switch 3 side), the main circuit configuration is the same as that of the example 1, and the same operation as that of the example 1 is performed. Here, an operation for preventing flow of overcurrent from the power wire into the filter capacitor 8 using the charging resistor 5 is explained. After confirming that the switch 3 has been closed, the controller 11 closes only the switch 12. Concurrently, a current flows to the filter capacitor 8 via the charging resistor 5, and, even when the filter capacitor 8 is not charged, flow of overcurrent is prevented. Then, when the voltage of the filter capacitor 8 exceeds a predetermined value, the switch 6 is closed. The voltage when the switch 6 is closed may be a fixed value or changed according to a secondary voltage of the transformer.

Then, the case of traveling in the DC power wire section is explained. In the case of traveling in the DC power wire section, the first power converter 1 may constantly operate as a brake chopper device, and the operation as the brake chopper is the same as that of the example 1. Further, even when one of separation of the pantograph, passage in the dead section, and traveling on a line for which returning of power to the power wire is not allowed is sensed during regeneration of the rolling stock, it is not necessary to open the high-speed circuit breaker 16 and the interrupter 18 because they have no effect on the chopper operation of the first power converter 1 without being opened. Note that, in the configuration like the example, the controller 11 may execute light load regenerative operation when rise of the power wire voltage to a predetermined value or more is sensed, and it is preferable to open the high-speed circuit breaker 16 and the interrupter 18.

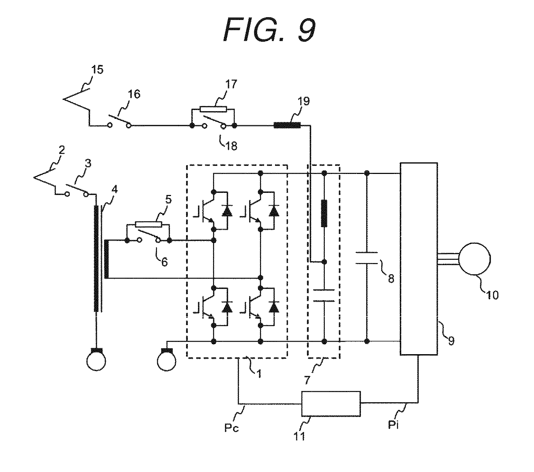

Further, the secondary-side winding of the transformer 4 may be used as the brake reactor like the example 2, and Fig. 9 shows a circuit configuration in this case. The configuration is the same as that of Fig. 7 except the absence of the electromagnetic contactor 13 and the brake reactor 14.

In the case of the DC power wire section, there is a line that is not allowed to deliver regenerative power by the regenerative brake to the power wire on the standard. In the case of traveling on the line, it is impossible to constantly return power to the power wire. Accordingly, a brake chopper mode may be provided, and the second power converter 9 may be allowed to start braking operation and the first power converter 1 may be allowed to be operated as a brake chopper device in the section.

As described above, the brake chopper is formed using the first power converter 1, the transformer 4, and the charging resistor 5, and thereby, addition of devices may be reduced and the brake chopper system may be downsized. In Figs. 7 to 9 of the example 3, driving of one three-phase motor is shown, however, a configuration in which a plurality of three-phase motors are driven may be employed. Further, connection of one first power converter to the transformer is shown, however, a configuration in which a plurality of first power converters are connected may be employed and, in this case, it is only necessary that the charging resistor and the electromagnetic contactor are parallel-connected with respect to each first power converter.

## Claims

1. A traction converter system comprising:
a collector that collects AC power;
a transformer that transforms the AC power input from the collector;
a first power converter that converts the AC power transformed in the transformer into DC power;
a second power converter that converts the DC power supplied from the first power converter into three-phase AC power to drive a three-phase AC motor;
a filter capacitor provided between the first power converter and the second power converter with one connected to a high-voltage side and the other connected to a low-voltage side; and
a charging resistor provided between the first power converter and the transformer and limiting charge current flowing from the transformer into the filter capacitor,
wherein the first power converter supplies regenerative power generated in the three-phase AC motor at braking of a rolling stock to the charging resistor and consumes the regenerative power with the charging resistor.

2. The traction converter system according to claim 1, further comprising:
a first contactor connected in parallel to the charging resistor;
a series circuit connected in parallel to the transformer, to which a brake reactor and a second contactor are series-connected; and
a third contactor provided between the series circuit and the transformer,
wherein the second contactor is closed and the first and third contactors are opened at braking of the rolling stock, and a regenerative current flows in the charging resistor and the brake reactor.

3. The traction converter system according to claim 1, further comprising a first contactor connected in parallel to the charging resistor,
wherein the first contactor is opened at braking of the rolling stock, and a regenerative current flows in the charging resistor and a secondary-side winding of the transformer.

4. The traction converter system according to any one of claims 1 to 3, wherein the first power converter has four switching elements and an intermediate point of series connection of the first switching element and the second switching element is connected to one side of a secondary-side winding of the transformer and an intermediate point of series connection of the third switching element and the fourth switching element is connected to the other side of the secondary-side winding of the transformer,
the charging resistor is connected between the intermediate point of series connection of the first switching element and the second switching element and the one side of the secondary-side winding of the transformer,
the first power converter has a unit that switches between a first conduction path in which the first and fourth switching elements are conducted and a second conduction path in which the second and third switching elements are conducted when regenerative power is supplied to the charging resistor, and
the conduction path is switched if at least one of the number of operations and an operation time of the first power converter to supply regenerative power to the charging resistor and a total amount of current flowing in the charging resistor exceeds a predetermined value.

5. The traction converter system according to any one of claims 1 to 3, wherein the first power converter has four switching elements and an intermediate point of series connection of the first switching element and the second switching element is connected to one side of a secondary-side winding of the transformer and an intermediate point of series connection of the third switching element and the fourth switching element is connected to the other side of the secondary-side winding of the transformer,
the charging resistor is connected between the intermediate point of series connection of the first switching element and the second switching element and the one side of the secondary-side winding of the transformer, and
the first power converter adjusts regenerative power supplied to the charging resistor by controlling a conduction ratio of at least one of the plurality of switching elements when the regenerative power is supplied to the charging resistor.

6. The traction converter system according to claim 5, wherein the first power converter has a unit that switches between a first mode of controlling the conduction ratio by switching the first switching element and a second mode of controlling the conduction ratio by switching the fourth switching element when the regenerative power is supplied to the charging resistor via the first conduction path for conduction of the first and fourth switching elements, and
the mode is switched if at least one of the number of operations and an operation time of supply of regenerative power to the charging resistor and a total amount of current flowing in the charging resistor exceeds a predetermined value in one of the modes.

7. The traction converter system according to any one of claims 1 to 6, wherein, if sensing one of separation of a pantograph, passage in a dead section, traveling on a line for which returning of power to the power wire is not allowed, and rise of the power wire voltage to a predetermined value or more at braking of the rolling stock, the first power converter supplies regenerative power generated in the three-phase AC motor to the charging resistor and consumes the regenerative power with the charging resistor.

8. The traction converter system according to any one of claims 1 to 7, further comprising:
a DC power collector that collects DC power; and
a second charging resistor provided between a DC unit between the first power converter and the second power converter and the DC power collector and limiting charge current flowing from the DC power collector into the filter capacitor,
wherein, while the rolling stock travels in an AC power wire section, AC power is received via the collector and, while the rolling stock travels in a DC power wire section, DC power is received via the DC power collector.

9. The traction converter system according to any one of claims 1 to 7, further comprising:
a switch that connects the collector to one of a DC unit between the first power converter and the second power converter and the transformer; and
a second charging resistor provided between the DC unit and the switch and limiting charge current flowing from the collector into the filter capacitor when the collector and the DC unit are connected by the switch,
wherein, while the rolling stock travels in an AC power wire section, the collector and the transformer are connected by the switch and AC power is supplied to the transformer via the collector and, while the rolling stock travels in a DC power wire section, the collector and the DC unit are connected by the switch and DC power is supplied to the DC unit via the collector.

10. A rolling stock comprising the traction converter system according to any one of claims 1 to 9.
